# EUROPEAN PATENT SPECIFICATION

(11) **EP 4 269 163 B1**
(45) Date of publication and mention of the grant of the patent: **29.10.2025**
(21) Application number: 21909514.8
(22) Date of filing: 23.12.2021
(51) Int. Cl.: B60L 53/14, B60L 53/16, B60L 53/20, B60L 58/10, H02J 7/00, B60L 1/00, B60L 3/00, B60L 53/62, B60L 3/04, B60L 55/00

(54) **CHARGING AND DISCHARGING CONTROL SYSTEM AND METHOD, AND VEHICLE**
LADE- UND ENTLADESTEUERUNGSSYSTEM UND -VERFAHREN SOWIE FAHRZEUG
SYSTÈME ET PROCÉDÉ DE COMMANDE DE CHARGE ET DE DÉCHARGE, ET VÉHICULE

(30) Priority: 25.12.2020 CN 202011563449
(43) Date of publication of application: 01.11.2023
(73) Proprietor: China Faw Co., Ltd., Changchun, Jilin 130011 (CN)
(72) Inventor: WANG, Jinming, Changchun, Jilin 130011 (CN); LIU, Zhitong, Changchun, Jilin 130011 (CN); LI, Wei, Changchun, Jilin 130011 (CN); LIANG, Shifu, Changchun, Jilin 130011 (CN); WANG, Bojun, Changchun, Jilin 130011 (CN)
(74) Representative: Penza, Giancarlo
(86) International application number: PCT/CN2021/140807
(87) International publication number: WO 2022/135519

(56) References cited:
- CN-A- 108 128 176
- CN-A- 108 923 482
- CN-A- 109 383 312
- CN-A- 109 383 312
- CN-A- 110 614 930
- CN-A- 112 744 101
- CN-U- 209 365 943
- US-A1- 2016 159 235
- US-A1- 2017 001 533
- US-A1- 2020 083 727
- US-A1- 2020 180 449
- US-A1- 2020 198 484
- US-B2- 9 184 587

## Description

### Cross-Reference to Related Application

The present invention claims priority to Chinese Patent Application No. 202011563449.0, filed to the Chinese Patent Office on December 25, 2020, which is incorporated in its entirety herein by reference.

### Technical Field

The present invention relates to the technical field of charging and discharging control, in particular to a charging and discharging control system and method, and a vehicle.

### Background

As battery life of electric vehicles prolongs, some vehicle manufacturers propose a function of Vehicle to Load (V2L), which provides Alternating Current (AC) power supply for an external general-purpose electrical load through a vehicle power supply.

In the related art, a vehicle has to be equipped with a charge gun and a discharge gun, in order to achieve AC charge and V2L, resulting in inconvenient use, occupation of a large storage space, and increase in the purchase cost and maintenance cost.

US 9184587B2, CN 109383312A and US 2020/198484A1 provide respective technical solutions; however, the abovementioned problem still remains unsolved.

### Summary

At least some embodiments of the present invention provides a charging and discharging control system. A charging branch circuit and a discharging branch circuit are arranged in an integrated manner to solve the problems of high cost and inconvenient use of a vehicle-mounted charging device and a vehicle-mounted discharging device.

The present invention provides a charging and discharging control system, including: a vehicle-mounted charging and discharging module, a charging and discharging gun module, a charging connection module and a discharging connection module. The discharging connection module includes at least one alternating-current discharging receptacle, the vehicle-mounted charging and discharging module is electrically connected with the charging and discharging gun module through a first connection assembly, and the charging and discharging gun module is electrically connected with the charging connection module through a second connection assembly. The vehicle-mounted charging and discharging module includes a vehicle-mounted controller and a vehicle-mounted charging and discharging assembly, and the vehicle-mounted controller is configured to obtain a first detection parameter on a vehicle side, and control the vehicle-mounted charging and discharging assembly to operate in a charging state or a discharging state according to the first detection parameter. The charging and discharging gun module includes a gun end control unit, and a discharging control switch, a charging control switch and a power supply module, wherein the discharging control switch, the charging control switch and the power supply module are electrically connected with the gun end control unit, the power supply module is configured to convert an alternating-current voltage provided through the vehicle-mounted charging and discharging assembly or the charging connection module into a direct-current power supply voltage of the gun end control unit. The gun end control unit is configured to obtain a second detection parameter on a charging and discharging gun side, and control the charging control switch to be switched on and the discharging control switch to be switched off in response to the second detection parameter satisfying a preset charging condition, to control the charging connection module charges the vehicle-mounted charging and discharging assembly; or the gun end control unit is configured to control the charging control switch to be switched off and the discharging control switch to be switched on in response to the second detection parameter satisfying a preset discharging condition, to control the vehicle-mounted charging and discharging assembly discharges the discharging connection module.

In an optional embodiment, the first connection assembly is configured with a charging control terminal, a first connection detecting terminal, a first alternating-current positive terminal, a first alternating-current negative terminal and a first grounding terminal, and the second connection assembly is arranged with a second connection detecting terminal, a second alternating-current positive terminal, a second alternating-current negative terminal, a second grounding terminal, a first input terminal and a second input terminal. A first end of the charging control terminal is electrically connected with the vehicle-mounted controller, and a second end of the charging control terminal is electrically connected with a first pin of the gun end control unit through a high-resistance type operational amplifier. A first end of the first connection detecting terminal is electrically connected with the vehicle-mounted controller, the first end of the first connection detecting terminal is further grounded through a grounding resistor assembly, a second end of the first connection detecting terminal is electrically connected with a second pin of the gun end control unit through a high-resistance type operational amplifier, and the second end of the first connection detecting terminal is further electrically connected with the second connection detecting terminal. A first end of the first alternating-current positive terminal is electrically connected with a positive end of the vehicle-mounted charging and discharging assembly, a second end of the first alternating-current positive terminal is electrically connected with the discharging connection module through the discharging control switch, and the second end of the first alternating-current positive terminal is further electrically connected with the second alternating-current positive terminal through the charging control switch. A first end of the first alternating-current negative terminal is electrically connected with a negative end of the vehicle-mounted charging and discharging assembly, and a second end of the first alternating-current negative terminal is respectively electrically connected with a negative power line of the alternating-current discharging receptacle and the second alternating-current negative terminal. A first end of the first grounding terminal is grounded, a second end of the first grounding terminal is electrically connected with the charging control terminal through a gun head resistor assembly, and a second end of the first grounding terminal is further electrically connected with the second grounding terminal. A first end of the first input terminal is respectively electrically connected with the gun head resistor assembly, and a second end of the first input terminal is electrically connected with the charging connection module and the second grounding terminal separately. A first end of the second input terminal is electrically connected with a third pin of the gun end control unit, and a second end of the second input terminal is electrically connected with the charging connection module.

In an optional embodiment, the gun head resistor assembly includes a first resistor, a second resistor, a third resistor and a gun end button. The gun end button is configured with a normally open and normally closed common pin, a normally open connection pin and a normally closed connection pin. The normally open connection pin is electrically connected with a first end of the first resistor, a second end of the first resistor is electrically connected with the first grounding terminal, the normally open and normally closed common pin is electrically connected with the charging control terminal, the normally closed connection pin is respectively electrically connected with a first end of the second resistor and a first end of the third resistor, a second end of the second resistor is electrically connected with the first grounding terminal, and a second end of the third resistor is electrically connected with the first input terminal.

In an optional embodiment, the charging and discharging gun module further includes a charging and discharging transfer switch. A control end of the charging and discharging transfer switch is electrically connected with the gun end control unit, a first end of the charging and discharging transfer switch is electrically connected with the first alternating-current negative terminal, a second end of the charging and discharging transfer switch is electrically connected with a negative power line of the discharging connection module, and a third end of the charging and discharging transfer switch is electrically connected with the second alternating-current negative terminal. The gun end control unit is further configured to control the first end to be connected with the third end in response to the second detection parameter satisfying the preset charging condition, or control the first end to be connected with the second end in response to the second detection parameter satisfying the preset discharging condition.

In an optional embodiment, the charging and discharging gun module further includes at least one temperature sensor. The temperature sensor is configured to measure a temperature in the charging and discharging gun to obtain a measurement result and send the measurement result to the gun end control unit. The gun end control unit is further configured to control the discharging control switch, the charging control switch and the charging and discharging transfer switch to be disconnected in response to the measurement result being beyond a preset temperature threshold.

In an optional embodiment, the charging and discharging gun module further includes a failure detection assembly. A first detection end of the failure detection assembly is electrically connected with an output end of the discharging control switch, a second detection end of the fault detection assembly is electrically connected with a second end of the charging and discharging transfer switch, an output end of the fault detection assembly is electrically connected with a detection pin of the gun end control unit, and the failure detection assembly is configured to detect whether the discharging control switch or the charging and discharging transfer switch exists a failure to obtain a failure detection result, and send the failure detection result to the gun end control unit. The gun end control unit is further configured to control the charging and discharging transfer switch and the charging control switch to be disconnected in response to receiving a first fault signal of the discharging control switch, and control the discharging control switch and the charging control switch to be disconnected in response to receiving a second fault signal of the charging and discharging transfer switch.

In an optional embodiment, the first detection parameter includes a first voltage parameter of the first connection detecting terminal arranged on the vehicle side and a first resistor parameter between the charging control terminal and the first grounding terminal. The second detection parameter includes a second voltage parameter of the first connection detecting terminal arranged on the charging and discharging gun side and a second resistor parameter between the charging control terminal and the first grounding terminal.

In an optional embodiment, the power supply module includes a first filter unit, a second filter unit and an alternating current-direct current conversion unit. A positive input end of the first filter unit is electrically connected with the first alternating-current positive terminal, a negative input end of the first filter unit is electrically connected with the first alternating-current negative terminal, a positive output end of the first filter unit is electrically connected with a positive input end of the alternating current-direct current conversion unit through a first diode, and a negative output end of the first filter unit is electrically connected with a negative input end of the alternating current-direct current conversion unit. A positive input end of the second filter unit is electrically connected with the second alternating-current positive terminal, a negative input end of the second filter unit is electrically connected with the second alternating-current negative terminal, a positive output end of the second filter unit is electrically connected with a positive input end of the alternating current-direct current conversion unit through a second diode, a negative output end of the second filter unit is electrically connected with a negative input end of the alternating current-direct current conversion unit, and an output end of the alternating current-direct current conversion unit is electrically connected with a power supply end of the gun end control unit. The alternating current-direct current conversion unit is configured to convert the alternating-current voltage configured by the vehicle-mounted charging and discharging assembly or the charging connection module into a direct-current power supply voltage of the gun end control unit to supply power to the gun end control unit.

In an optional embodiment, the charging connection module includes a charging connection control unit and a grid-side connection portion. The charging connection control unit is electrically connected with an alternating-current power grid through the grid-side connection portion, and multiple pins of the charging connection control unit are electrically connected with multiple terminals of the second connection assembly in a one-to-one corresponding manner. The charging connection module is configured to charging the vehicle-mounted charging and discharging assembly through the charging and discharging gun module in response to the grid-side connection portion being connected with the alternating-current power grid.

The present invention further provides a transport, including the charging and discharging control system above-mentioned.

The present invention further provides a charging and discharging control method, applied to controlling charging and discharging states of a vehicle-mounted charging and discharging module and a charging and discharging gun module, and including:
obtaining a first detection parameter on a vehicle side, and controlling the vehicle-mounted charging and discharging module to work in a charging state or a discharging state according to the first detection parameter;
obtaining a second detection parameter on a charging and discharging gun side;
determining whether the second detection parameter satisfies a preset charging condition or a preset discharging condition;
controlling the vehicle-mounted charging and discharging module and the charging and discharging gun module to execute charging operation in response to the second detection parameter satisfying the preset charging condition;
controlling the vehicle-mounted charging and discharging module and the charging and discharging gun module to execute discharging operation in response to the second detection parameter satisfying the preset discharging condition.

### Brief Description of the Drawings

Fig. 1 is a schematic structural diagram of a charging and discharging control system according to an embodiment of the present disclosure;
Fig. 2 is a schematic structural diagram of another charging and discharging control system according to an embodiment of the present invention;
Fig. 3 is a schematic structural diagram of yet another charging and discharging control system according to an embodiment of the present invention;
Fig. 4 is a schematic diagram of mode change of a charging and discharging control system according to an embodiment of the present disclosure;
Fig. 5 is a schematic structural diagram of a transport according to an embodiment of the present invention;
Fig. 6 is a flowchart of a charging and discharging control method according to an embodiment of the present invention.

### Detailed Description

The present invention will be elaborated hereafter in conjunction with the accompanying drawings and embodiments. The particular embodiments described herein are for the purpose of explanation of the present invention only. For ease of description, only portions associated with the present invention are shown in the accompanying drawings.

### Embodiment 1 of the present disclosure

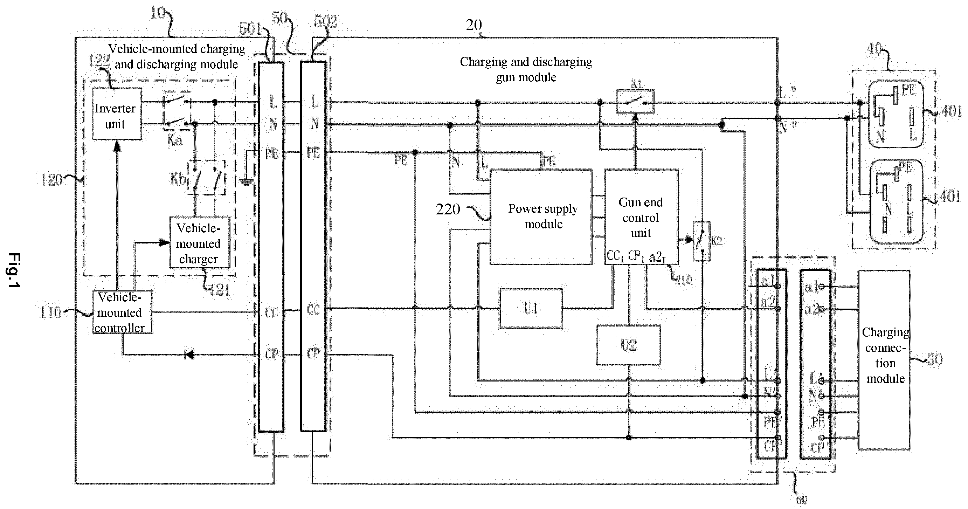

Fig. 1 is a schematic structural diagram of a charging and discharging control system according to an embodiment of the present disclosure. This embodiment is applicable to an application scene of automatically changing a working state of a charging and discharging gun integrated with a charging function and a discharging function. The charging and discharging gun is electrically connected with a vehicle-mounted charging, the charging and discharging gun is electrically connected with discharging module, the charging and discharging gun is electrically connected with a charging connection module, and the charging and discharging gun is electrically connected with a discharging connection module.

As shown in Fig. 1, the charging and discharging control system 100 includes a vehicle-mounted charging and discharging module 10, a charging and discharging gun module 20, a charging connection module 30 and a discharging connection module 40. The discharging connection module 40 includes at least one alternating-current discharging receptacle 401. The vehicle-mounted charging and discharging module 10 is electrically connected with the charging and discharging gun module 20 through a first connection assembly 50. The first connection assembly 50 is configured with a charging control terminal CC, a first connection detecting terminal CP, a first alternating-current positive terminal L, a first alternating-current negative terminal N and a first grounding terminal PE. The charging and discharging gun module 20 is electrically connected with the charging connection module 30 through a second connection assembly 60. The second connection assembly 60 is configured with a second connection detecting terminal CP', a second alternating-current positive terminal L', a second alternating-current negative terminal N', a second grounding terminal PE', a first input terminal a1 and a second input terminal a2.

The charging connection module 30 is configured to connect the second connection assembly 60 to an alternating-current power grid, for example, the alternating-current power grid have 220V mains power. The discharging connection module 40 is configured to connect to an alternating-current power load, for example, the alternating-current power load includes a vehicle-mounted refrigerator and other emergency appliances.

In this embodiment, an alternating-current discharging receptacle 401 may be one or more of a three-pin receptacle and a five-pin receptacle. The three-pin receptacle is configured with a grounding pin, a live wire pin and a neutral wire pin. The five-pin receptacle is provided with a grounding pin, two live wire pins and two neutral wire pins. The live wire pin is electrically connected with a positive power line L", the neutral wire pin is electrically connected with a negative power line N", and the neutral wire pin is electrically connected with the grounding pin, which improves grounding reliability and safety favorably.

In this embodiment, the first connection assembly 50 includes a vehicle-gun connection receptacle 501 and a vehicle-gun connection plug 502. The vehicle-gun connection receptacle 501 is arranged on a vehicle side, and the vehicle-gun connection plug 502 is arranged on a charging and discharging gun side. A first end of the charging control terminal CC, a first end of the first connection detecting terminal CP, a first end of the first alternating-current positive terminal L, a first end of the first alternating-current negative terminal N, and a first end of the first grounding terminal PE are arranged on the vehicle-gun connection receptacle 501. A second end of the charging control terminal CC, a second end of the first connection detecting terminal CP, a second end of the first alternating-current positive terminal L, a second end of the first alternating-current negative terminal N, and a second end of the first grounding terminal PE are arranged on the vehicle-gun connection plug 502.

In this embodiment, the second connection assembly 60 includes a gun-grid connection receptacle 601 and a gun-grid connection plug 602. The gun-grid connection receptacle 601 is arranged on the charging and discharging gun side, and the gun-grid connection plug 602 is arranged on a charging connection module 30 side. A first end of the second connection detecting terminal CP', a first end of the second alternating-current positive terminal L', a first end of the second alternating-current negative terminal N', a first end of the second grounding terminal PE', a first end of the first input terminal a1 and a first end of the second input terminal a2 are arranged on the gun-grid connection receptacle 601. A second end of the second connection detecting terminal CP', a second end of the second alternating-current positive terminal L', a second end of the second alternating-current negative terminal N', a second end of the second grounding terminal PE', a second end of the first input terminal a1, and a second end of the second input terminal a2 are arranged in the gun-grid connection receptacle 601.

Optionally, as shown in Fig. 1, the vehicle-mounted charging and discharging module 10 includes a vehicle-mounted controller 110 and a vehicle-mounted charging and discharging assembly 120. The vehicle-mounted controller 110 is configured to obtain a first detection parameter on a vehicle side of the first connection assembly 50, and control the vehicle-mounted charging and discharging assembly 120 to operate in a charging state or a discharging state according to the first detection parameter.

The vehicle-mounted charging and discharging assembly 120 includes a vehicle-mounted charger 121 and an inverter unit 122. The vehicle-mounted charger 121 is electrically connected with the first end of the first alternating-current positive terminal L and the first end of the first alternating-current negative terminal N through a charging switch Kb. The inverter unit 122 is electrically connected with the first end of the first alternating-current positive terminal L and the first end of the first alternating-current negative terminal N through a discharging switch Ka.

In a charging process, the vehicle-mounted controller 110 controls the charging switch Kb to be switched on and the discharging switch Ka to be switched off, and the vehicle-mounted charger 121 converts an alternating-current charging voltage transmitted through the charging and discharging gun module 20 into a direct-current voltage, to charging a vehicle-mounted power battery. In a discharging process, the vehicle-mounted controller 110 controls the discharging switch Ka to be switched on and the charging switch Kb to be switched off, and the inverter unit 122 converts a direct-current voltage into an alternating-current charging voltage, and discharges the alternating-current discharging receptacle 401 through a discharging circuit of the charging and discharging gun module 20.

Optionally, as shown in Fig. 1, the charging and discharging gun module 20 includes a gun end control unit 210, and a discharging control switch K1, a charging control switch K2 and a power supply module 220 electrically connected with the gun end control unit 210. The power supply module 220 is configured to convert an alternating-current voltage provided through the vehicle-mounted charging and discharging assembly 120 or the charging connection module 30 into a direct-current power supply voltage of the gun end control unit 210. The gun end control unit 210 is configured to obtain a second detection parameter on a charging and discharging gun side of the first connection assembly 50, and control the charging control switch K2 to be switched on and the discharging control switch K1 to be switched off in response to the second detection parameter satisfying a preset charging condition, to control the charging connection module 30 charges the vehicle-mounted charging and discharging assembly 120. Optionally, the gun end control unit is configured to control the charging control switch K2 to be switched off and the discharging control switch K1 to be switched on in response to the second detection parameter satisfying a preset discharging condition, to control the vehicle-mounted charging and discharging assembly 120 discharges the discharging connection module 40.

Optionally, the discharging control switch K1 and the charging control switch K2 are configured to be relays. The gun end control unit 210 is electrically connected with control portions of the relays, and controls a switch portion of the discharging control switch K1 and a switch portion of the charging control switch K2 to be switched on or off, to control a charging circuit and a discharging circuit are connected or disconnected.

In response to a connection state of the first connection assembly 50 and the second connection assembly 60 changing, the first detection parameter and the second detection parameter have different values, such that the charging and discharging modes may be changed according to the obtained values of the first detection parameter and the second detection parameter.

In response to the charging connection module 30 being connected with the alternating-current power grid, the vehicle-gun connection receptacle 501 of the first connection assembly 50 is connected with the vehicle-gun connection plug 502 in a plug-in connection, and the gun-grid connection receptacle 601 of the second connection assembly 60 is connected with the gun-grid connection plug 602 in a plug-in connection, the values of the first detection parameter and the second detection parameter satisfy the preset charging condition. The vehicle-mounted controller 110 controls the charging switch Kb to be switched on and the discharging switch Ka to be switched off, and the gun end control unit 210 controls the charging control switch K2 to be switched on and the discharging control switch K1 to be switched off. In this case, the charging circuit of the charging and discharging gun module 20 is connected, the discharging circuit is disconnected, and an alternating-current voltage provided through the charging connection module 30 is transmitted to the vehicle-mounted charger 121 through the charging circuit, to execute charging operation. In response to the gun-grid connection receptacle 601 of the second connection assembly 60 being disconnected from the gun-grid connection plug 602, and the vehicle-gun connection receptacle 501 of the first connection assembly 50 is connected with the vehicle-gun connection plug 502 in a plug-in connection, the values of the first detection parameter and the second detection parameter satisfy the preset discharging condition. The vehicle-mounted controller 110 controls the charging switch Kb to be switched off and the discharging switch Ka to be switched on, and the gun end control unit 210 controls the charging control switch K2 to be switched off and the discharging control switch K1 to be switched on. In this case, the charging circuit of the charging and discharging gun module 20 is disconnected, the discharging circuit is connected, and the inverter unit 122 converts a direct-current voltage of the vehicle-mounted power battery into an alternating-current voltage, and transmits the alternating-current voltage to the alternating-current discharging receptacle 401 through the discharging circuit, to execute discharging operation.

Therefore, the charging and discharging control system provided in the present invention identifies connection states between the vehicle-mounted charging and discharging module, the charging and discharging gun module, the charging connection module and the discharging connection module based on the detection parameters, and automatically changes the charging function and the discharging function based on the detection parameters. Accordingly, the problems of high cost and inconvenient use of the vehicle-mounted charging device and the discharging device are solved, integrated setting and automatic change of the charging function and the discharging function without manually selecting the mode are achieved, a production cost is reduced, the charging connection module and the discharging connection module are prevented from being charged simultaneously, the risk of electric shock caused by misoperation by personnel is reduced, and the reliability and the safety of the system are improved.

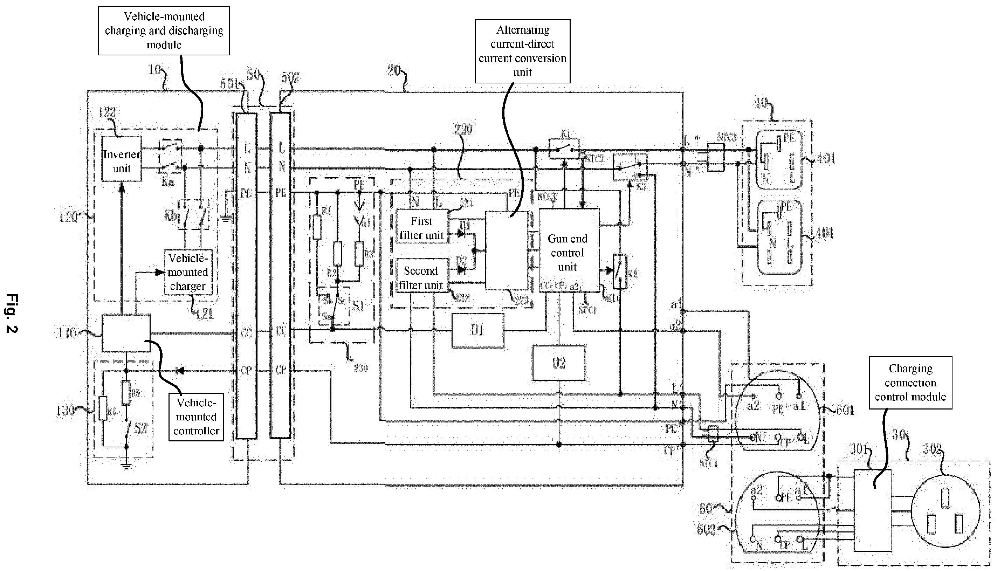

Fig. 2 is a schematic structural diagram of another charging and discharging control system according to an embodiment of the present invention.

Optionally, as shown in Fig. 2, the charging connection module 30 includes a charging connection control unit 301 and a grid-side connection portion 302. The charging connection control unit 301 is electrically connected with an alternating-current power grid through the grid-side connection portion 302, and multiple pins of the charging connection control unit 301 are electrically connected with multiple terminals of the second connection assembly 60 in a one-to-one corresponding manner. The charging connection module 30 is configured to charging the vehicle-mounted charging and discharging assembly 120 through the charging and discharging gun module 20 in response to the grid-side connection portion 302 being connected with the alternating-current power grid.

The grid-side connection portion 302 is configured to be an alternating-current charging plug, and the grid-side connection portion 302 is electrically connected with the alternating-current power grid through an alternating-current receptacle. For example, the alternating-current charging plug is configured to be a three-pin plug, a first pin of the alternating-current charging plug is configured to be connected with a live wire of the alternating-current power grid, a second pin of the alternating-current charging plug is configured to be connected with a neutral wire of the alternating-current power grid, and a third pin of the alternating-current charging plug is a grounding pin.

In the charging process, an operator can connect the gun-grid connection receptacle 601 and the gun-grid connection plug 602 in the plug-in connection, and electrically connect the grid-side connection portion 302 to the alternating-current power grid, such that the second grounding terminal PE' is electrically connected with the first input terminal a1, the second alternating-current positive terminal L' is electrically connected with the live wire of the alternating-current power grid, the second alternating-current negative terminal N' is electrically connected with the neutral wire of the alternating-current power grid, and the second grounding terminal PE' is electrically connected with the grounding pin of the grid-side connection portion 30. In this case, the first detection parameter and the second detection parameter satisfy the preset charging condition, the charging circuit of the charging and discharging gun module 20 is connected, and the alternating-current voltage provided by the charging connection module 30 is transmitted to the vehicle-mounted charger 121 through the charging circuit, to execute charging operation.

Optionally, as shown in Fig. 2, the charging and discharging gun module 20 further includes a charging and discharging transfer switch K3. A control end of the charging and discharging transfer switch K3 is electrically connected with the gun end control unit 210, a first end a of the charging and discharging transfer switch K3 is electrically connected with the first alternating-current negative terminal N, a second end b of the charging and discharging transfer switch K3 is electrically connected with a negative power line N" of the discharging connection module 40, and a third end c of the charging and discharging transfer switch K3 is electrically connected with the second alternating-current negative terminal N'. The gun end control unit 210 is further configured to control the first end a to be connected with the third end c in response to the second detection parameter satisfies the preset charging condition, or control the first end a to be connected with the second end b in response to the second detection parameter satisfying the preset discharging condition.

Optionally, the charging and discharging transfer switch K3 is configured to be a relay, the first end a of the charging and discharging transfer switch K3 is a normally open and normally closed common contact of the relay, the second end b of the charging and discharging transfer switch K3 is a normally closed contact of the relay, and the third end c of the charging and discharging transfer switch K3 is a normally open contact of the relay.

In a charging process, the gun end control unit 210 controls the charging control switch K2 to be switched on, controls the discharging control switch K1 to be switched off, and controls the first end a and the third end c of the charging and discharging transfer switch K3 to be connected. In a discharging process, the gun end control unit 210 controls the charging control switch K2 to be switched off, controls the discharging control switch K1 to be switched on, and controls the first end a and the second end b of the charging and discharging transfer switch K3 to be connected. Thus, electrical isolation between the charging circuit and the discharging circuit may be achieved, the charging connection module and the discharging connection module are prevented from being charged simultaneously, the risk of electric shock caused by misoperation by personnel is reduced, and the reliability and the safety of the system are improved.

As shown in Fig. 2, a first end of the charging control terminal CC is electrically connected with the vehicle-mounted controller 110, and a second end of the charging control terminal CC is electrically connected with a first pin CC_{I} of the gun end control unit 210 through a first high-resistance type operational amplifier U1. A first end of the first connection detecting terminal CP is electrically connected with the vehicle-mounted controller 110, the first end of the first connection detecting terminal CP is further grounded through a grounding resistor assembly 130, a second end of the first connection detecting terminal CP is electrically connected with a second pin CP_{I} of the gun end control unit 210 through a second high-resistance type operational amplifier U2, and the second end of the first connection detecting terminal CP is further electrically connected with the second connection detecting terminal CP'. A first end of the first alternating-current positive terminal L is electrically connected with a positive end of the vehicle-mounted charging and discharging assembly 120, a second end of the first alternating-current positive terminal N is electrically connected with the discharging connection module 40 through the discharging control switch K1, and the second end of the first alternating-current positive terminal L is further electrically connected with the second alternating-current positive terminal L' through the charging control switch K2. A first end of the first alternating-current negative terminal N is electrically connected with a negative end of the vehicle-mounted charging and discharging assembly 120, and a second end of the first alternating-current negative terminal N is electrically connected with a negative power line of the alternating-current discharging receptacle 201 and the second alternating-current negative terminal N' separately. A first end of the first grounding terminal PE is grounded, a second end of the first grounding terminal PE is electrically connected with the charging control terminal through a gun head resistor assembly 230, and a second end of the first grounding terminal PE is further electrically connected with the second grounding terminal PE'. A first end of the first input terminal a1 is electrically connected with the gun head resistor assembly 230, and a second end of the first input terminal a1 is electrically connected with the charging connection control unit 301 and the second end of the first input terminal a1 is electrically connected with the second grounding terminal PE'. A first end of the second input terminal a2 is electrically connected with a third pin a2_{I} of the gun end control unit 210, and a second end of the second input terminal a2 is electrically connected with the charging connection control unit 301.

A first end of the first grounding terminal PE can be electrically connected with vehicle body geoelectric, to achieve a equivalently grounding.

In this embodiment, the grounding resistor assembly 130 includes a fourth resistor R4, a fifth resistor R5, and a grounding switch S2 connected in series to the fifth resistor R5. In response to the vehicle-gun connection receptacle 501 of the first connection assembly 50 being connected with the vehicle-gun connection plug 502 in a plug-in connection, the grounding switch S2 is switched on. In response to the vehicle-gun connection receptacle 501 being disconnected from the vehicle-gun connection plug 502 of the first connection assembly 50, the grounding switch S2 is switched off.

In this embodiment, the vehicle-mounted controller 110 may obtain a voltage signal of the charging control terminal CC and the first connection detecting terminal CP arranged on the vehicle side, and take the voltage signals as a first detection signal. The gun end control unit 210 may obtain a voltage signal of the charging control terminal CC and the first connection detecting terminal CP on the charging and discharging gun side, and take the voltage signal as a second detection signal.

Optionally, as shown in Fig. 2, the gun head resistor assembly 230 includes a first resistor R1, a second resistor R2, a third resistor R3 and a gun end button S1. The gun end button S1 is configured with a normally open and normally closed common pin Sa, a normally open connection pin Sb and a normally closed connection pin Sc. The normally open connection pin Sb is electrically connected with a first end of the first resistor R1, a second end of the first resistor R1 is electrically connected with the first grounding terminal PE, the normally open and normally closed common pin Sa is electrically connected with the charging control terminal CC, the normally closed connection pin Sc is electrically connected with a first end of the second resistor R2 and a first end of the third resistor R3, a second end of the second resistor R2 is electrically connected with the first grounding terminal PE, and a second end of the third resistor R3 is electrically connected with the first input terminal a1.

In response to the first connection assembly 50 being plugged in and out, an operator may press the gun end button S1, to connect the normally open and normally closed common pin Sa to the normally open connection pin Sb, and disconnect the normally open and normally closed common pin Sa from the normally closed connection pin Sc. After the vehicle-gun connection receptacle 501 of the first connection assembly 50 is connected with the vehicle-gun connection plug 502 in a plug-in connection, an operator releases the gun end button S1, such that the normally open and normally closed common pin Sa is disconnected from the normally open connection pin Sb, and the normally open and normally closed common pin Sa is connected with the normally closed connection pin Sc.

In the embodiment, in response to the charging connection module 30 being connected with an alternating-current power grid, and the gun-grid connection receptacle 601 of the second connection assembly 60 is connected with the gun-grid connection plug 602 in a plug-in connection, the first input terminal a1 is electrically connected with the second grounding terminal PE', and the third resistor R3 is electrically connected with the first grounding terminal PE through the first input terminal a1 and the second grounding terminal PE'. In this case, a resistance value of the gun head resistor assembly 230 is equal to a parallel resistance value of the second resistor R2 and the third resistor R3, and the first connection detecting terminal CP is electrically connected with the alternating-current power grid, such that a voltage value of the first connection detecting terminal CP is greater than zero. In response to the gun-grid connection receptacle 601 of the second connection assembly 60 being disconnected from the gun-grid connection plug 602, the third resistor R3 is disconnected from the first grounding terminal PE. In this case, the resistance value of the gun head resistor assembly 230 is equal to a resistance value of the second resistor R2, the first connection detecting terminal CP is disconnected from the alternating-current power grid, and a voltage value of the first connection detecting terminal CP is equal to zero, such that the gun end control unit 210 may identify a connection state of the connection assembly through detecting the parameter value, and execute automatic change of the charging and discharging states.

Optionally, as shown in Fig. 2, the first detection parameter includes a first voltage parameter Vcp of the first connection detecting terminal CP arranged on the vehicle side and a first resistor parameter R10 between the charging control terminal and the first grounding terminal. The second detection parameter includes a second voltage parameter Vcp' of the first connection detecting terminal arranged on the charging and discharging gun side and a second resistor parameter R20 between the charging control terminal CC and the first grounding terminal PE.

In response to the first connection assembly 50 is normally connected, the first voltage parameter Vcp is equal to the second voltage parameter Vcp', and the first resistor parameter R10 is equal to the second resistor parameter R20.

According to the invention, the vehicle-mounted controller 110 identifies a connection state of the first connection assembly 50 and the second connection assembly 60 based on the first detection parameter, and controls the charging switch Kb and the discharging switch Ka to be switched on or off. The gun end control unit 210 identifies the connection state of the first connection assembly 50 and the second connection assembly 60 based on the first detection parameter, and controls the charging control switch K2 and the discharging control switch K1 to be switched on or off to change the charging mode and the discharging mode.

Exemplary, a resistance value of the first resistor R1 is 3.3 kilohms, a resistance value of the second resistor R2 is 2.1 kilohms, a resistance value of the third resistor R3 is 1 kilohm, and a charging-discharging mode change process is described as follows.

In response to the vehicle-mounted controller 110 detecting the first voltage parameter Vcp is greater than 0 and the first resistor parameter R10 is equal to 0.67 kilohm, the vehicle-mounted controller 110 determines the first connection assembly 50 and the second connection assembly 60 are connected, and the vehicle-mounted controller 110 controls the charging switch Kb to be switched on and the discharging switch Ka to be switched off. In response to the gun end control unit 210 detecting the second voltage parameter Vcp' is greater than 0 and the second resistor parameter R20 is equal to 0.67 kilohm, the gun end control unit 210 determines that the first connection assembly 50 and the second connection assembly 60 are connected, and the gun end control unit 210 controls the charging control switch K2 to be switched on and the discharging control switch K1 to be switched off. In this case, the charging circuit of the charging and discharging gun module 20 is connected, and the discharging circuit is disconnected, to execute charging operation.

In response to the vehicle-mounted controller 110 detecting the first voltage parameter Vcp is equal to 0 and the first resistor parameter R10 is equal to 2.1 kilohms, the vehicle-mounted controller 110 determines that the first connection assembly 50 is connected and the second connection assembly 60 is disconnected, and the vehicle-mounted controller 110 controls the charging switch Kb to be switched off and the discharging switch Ka to be switched on. In response to the gun end control unit 210 detecting the second voltage parameter Vcp' is equal to 0 and the second resistor parameter R20 is equal to 2.1 kilohms, the gun end control unit 210 determines that the first connection assembly 50 is connected and the second connection assembly 60 is disconnected, and the gun end control unit 210 controls the charging control switch K2 to be switched on and the discharging control switch K1 to be switched off. In this case, the charging circuit of the charging and discharging gun module 20 is disconnected, and the discharging circuit is connected to execute discharging operation.

Those skilled in the art can also set a trigger button between the second end of the third resistor R3 and the first grounding terminal PE, and an operator can adjust a resistance value between the charging control terminal CC and the first grounding terminal PE through pressing the button to change the charging mode and the discharging mode, which is not limited herein.

Optionally, as shown in Fig. 2, the charging and discharging gun module 20 further includes at least one negative temperature coefficient (NTC) sensor. The NTC sensor is configured to measure a temperature in the charging and discharging gun and send a measurement result to the gun end control unit 210. The gun end control unit 210 is further configured to control the discharging control switch K1, the charging control switch K2 and the charging and discharging transfer switch K3 to be disconnected in response to the measurement result being beyond a preset temperature threshold.

Exemplary, in combination with Fig. 2, three NTC sensors may be configured. The three NTC sensors include a first temperature sensor NTC1, a second temperature sensor NTC2, and a third temperature sensor NTC3. The first temperature sensor NTC1 is arranged between the second alternating-current positive terminal L 'and the second alternating-current negative terminal N' of the gun-grid connection receptacle 601, and the first temperature sensor NTC1 is configured to measure a heating temperature of the gun-grid connection receptacle 601. The second temperature sensor NTC2 is arranged on a shell of the discharging control switch K1, and the second temperature sensor NTC2 is configured to measure a heating temperature of the discharging control switch K1. The third temperature sensor NTC3 is arranged between the positive power line L" and the negative power line N", and the third temperature sensor NTC3 is configured to measure a heating temperature of a power supply line of the discharging connection module 40.

In an embodiment of the disclosure, in response to the temperature measurement result of any one of the first temperature sensor NTC1, the second temperature sensor NTC2, and the third temperature sensor NTC3 being beyond the preset temperature threshold, the gun end control unit 210 controls all the discharging control switch K1, the charging control switch K2, and the charging and discharging transfer switch K3 to be switched off. The preset temperature threshold corresponding to different temperature sensors may be set to the same or different values, which is not limited herein.

Optionally, as shown in Fig. 2, the power supply module 220 includes a first filter unit 221, a second filter unit 222 and an alternating current-direct current conversion unit 223. A positive input end of the first filter unit 221 is electrically connected with the first alternating-current positive terminal L, a negative input end of the first filter unit 221 is electrically connected with the first alternating-current negative terminal N, a positive output end of the first filter unit 221 is electrically connected with a positive input end of the alternating current-direct current conversion unit 223 through a first diode D1, and a negative output end of the first filter unit 221 is electrically connected with a negative input end of the alternating current-direct current conversion unit 223. A positive input end of the second filter unit 222 is electrically connected with the second alternating-current positive terminal L', a negative input end of the second filter unit 222 is electrically connected with the second alternating-current negative terminal N', a positive output end of the second filter unit 222 is electrically connected with a positive input end of the alternating current-direct current conversion unit 223 through a second diode D2, a negative output end of the second filter unit 222 is electrically connected with a negative input end of the alternating current-direct current conversion unit 223, and an output end of the alternating current-direct current conversion unit 223 is electrically connected with a power supply end of the gun end control unit 210. The alternating current-direct current conversion unit 223 is configured to convert the alternating-current voltage provided by the vehicle-mounted charging and discharging assembly 120 or the charging connection module 30 into a direct-current power supply voltage of the gun end control unit 210 to supply power to the gun end control unit 210.

In a charging process, the second filter unit 222 and the alternating current-direct current conversion unit 223 convert an alternating-current voltage provided by the charging connection module 30 into a direct-current voltage of the gun end control unit 210, to supply power to the gun end control unit 210. In a discharging process, the first filter unit 221 and the alternating current-direct current conversion unit 223 convert an alternating-current voltage provided by the vehicle-mounted charging and discharging assembly 120 into a direct-current power supply voltage of the gun end control unit 210, to supply power to the gun end control unit 210. Thus bidirectional power supply can be achieved during charging and discharging time period, and system reliability is improved.

Those skilled in the art can also convert the alternating-current voltage provided by the vehicle-mounted charging and discharging assembly 120 or the charging connection module 30 into the direct-current power supply voltage of the gun end control unit through cooperation of multiple relays and the gun end control unit 210, which is not limited herein.

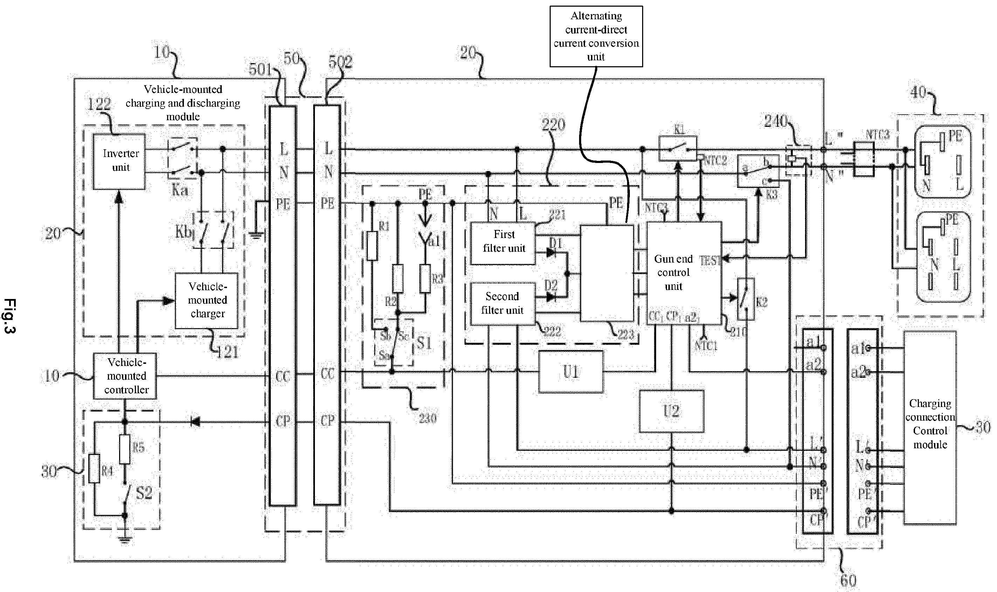

Fig. 3 is a schematic structural diagram of yet another charging and discharging control system according to an embodiment of the present invention.

Optionally, as shown in Fig. 3, the charging and discharging gun module 20 further includes a failure detection assembly 240. A first detection end of the failure detection assembly 240 is electrically connected with an output end of the discharging control switch K1, a second detection end of the failure detection assembly 240 is electrically connected with a second end of the charging and discharging transfer switch K3, an output end of the failure detection assembly 240 is electrically connected with a detection pin TEST of the gun end control unit 210, and the failure detection assembly 240 is configured to detect whether the discharging control switch K1 or the charging and discharging transfer switch K3 has a failure, and send a failure detection result to the gun end control unit 210. The gun end control unit 210 is further configured to control the charging and discharging transfer switch K3 and the charging control switch K2 to be disconnected in response to a first failure signal of the discharging control switch K1 being received, and control the discharging control switch K1 and the charging control switch K2 to be disconnected in response to a second failure signal of the charging and discharging transfer switch K3 being received.

The failure types of the discharging control switch K1 and the charging and discharging transfer switch K3 include switch failure or adhesion failure.

Exemplary, it can be determined whether the discharging control switch K1 and the charging and discharging transfer switch K3 have a failure through measuring a voltage value at a connection point.

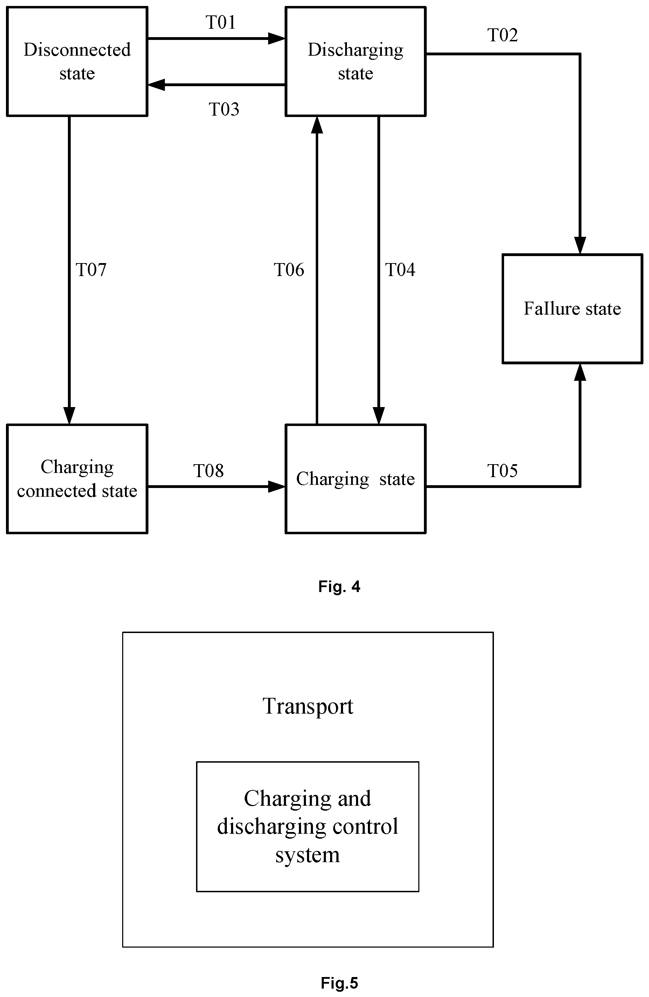

Fig. 4 is a schematic diagram of mode change of a charging and discharging control system according to an embodiment 1 of the present disclosure. A working mode of the charging and discharging control system in this embodiment includes a disconnected state, a charging connected state, a discharging state, a charging state, or a failure state. Based on the above embodiment, a process of changing the working mode of the charging and discharging control system is as follows:
T01: A disconnected state changes to a discharging state

In response to determining that the normally open and normally closed common pin Sa of the gun end button S1 is connected with the normally closed connection pin Sc and the first input terminal a1 is disconnected from the first grounding terminal PE based on the first detection parameter and the second detection parameter, the gun end control unit 210 controls the discharging control switch K1 to be switched on, controls the charging control switch K2 to be switched off, and controls the first end a and the second end b of the charging and discharging transfer switch K3 to be connected, such that the charging and discharging control system 100 enters the discharging state.
T02: A discharging state changes to a failure state
   (1) In response to a temperature measurement result of the second temperature sensor NTC2 being beyond the first preset temperature threshold (for example, the first preset temperature threshold may be 105°C), or the temperature measurement result of the third temperature sensor NTC3 being beyond the second preset temperature threshold (for example, the second preset temperature threshold may be 85°C), the gun end control unit 210 determines that the temperature is too high, controls the discharging control switch K1 to be switched off, controls the charging control switch K2 to be switched off, and controls the first end a and the third end c of the charging and discharging transfer switch K3 to be connected, such that the charging and discharging control system 100 enters the failure state.
   (2) In response to the failure detection assembly 240 detecting that the discharging control switch K1 has a failure, the gun end control unit 210 controls the charging control switch K2 to be switched off, and controls the first end a and the second end b of the charging and discharging transfer switch K3 to be disconnected, such that the charging and discharging control system 100 enters the failure state.
   (3) In response to the failure detection assembly 240 detects that the charging and discharging transfer switch K3 has a failure, the gun end control unit 210 controls the discharging control switch K1 to be switched off, and controls the charging control switch K2 to be switched off, such that the charging and discharging control system 100 enters the failure state.
T03: A discharging state changes to a disconnected state

In response to determining that the first connection assembly 50 is disconnected based on the first detection parameter and the second detection parameter, the gun end control unit 210 controls the discharging control switch K1 to be switched off, controls the charging control switch K2 to be switched off, and controls the first end a and the second end b of the charging and discharging transfer switch K3 to be connected, such that the charging and discharging control system 100 enters the disconnected state.

T04: A discharging state changes to a charging state
In response to determining that the normally open and normally closed common pin Sa of the gun end button S1 is connected with the normally closed connection pin Sc, the first input terminal a1 is connected with the first grounding terminal PE, the grounding switch S2 is switched on, and a voltage value of the first connection detecting terminal CP is greater than zero according to the first detection parameter and the second detection parameter, the gun end control unit 210 controls the discharging control switch K1 to be switched off, controls the charging control switch K2 to be switched on, and controls the first end a and the third end c of the charging and discharging transfer switch K3 to be connected, such that the charging and discharging control system 100 enter the charging state.

T05: A charging state changes to a failure state
(1) In response to the temperature measurement result of the first temperature sensor NTC1 being beyond a third preset temperature threshold (for example, the third preset temperature threshold may be 85°C), the gun end control unit 210 determines that the temperature is too high, controls the discharging control switch K1 to be switched off, controls the charging control switch K2 to be switched off, and controls the first end a and the third end c of the charging and discharging transfer switch K3 to be disconnected, such that the charging and discharging control system 100 enters the failure state.
(2) In response to the gun end control unit 210 determining that the first input terminal a1 is short-circuited with the second input terminal a2, the gun end control unit 210 controls the discharging control switch K1 to be switched off, controls the charging control switch K2 to be switched off, and controls the first end a and the third end c of the charging and discharging transfer switch K3 to be disconnected, such that the charging and discharging control system 100 enters the failure state.

T06: A charging state changes to a discharging state
In the charging state, the gun end control unit 210 detects the first detection parameter and the second detection parameter in real time. In response to determining that the first input terminal a1 is disconnected from the first grounding terminal PE based on the first detection parameter and the second detection parameter, the gun end control unit 210 controls the discharging control switch K1 to be switched on, controls the charging control switch K2 to be switched off, and controls the first end a and the second end b of the charging and discharging transfer switch K3 to be connected, such that the charging and discharging control system 100 enters the discharging state.

T07: A disconnected state changes to a charging connected state
In response to determining that the first input terminal a1 is connected with the first grounding terminal PE and the first connection assembly 50 is disconnected based on the first detection parameter and the second detection parameter, the gun end control unit 210 outputs no control signal, and the discharging control switch K1, the charging control switch K2, and the charging and discharging transfer switch K3 maintain the current state, such that the charging and discharging control system 100 enters the charging connected state.

T08: A charging connected state changes to a charging state
In response to determining that the first input terminal a1 being connected with the first grounding terminal PE, the first connection assembly 50 is connected, and a voltage value of the first connection detecting terminal CP is greater than zero according to the first detection parameter and the second detection parameter, the gun end control unit 210 controls the discharging control switch K1 to be switched off, controls the charging control switch K2 to be switched on, and controls the first end a and the third end c of the charging and discharging transfer switch K3 to be connected, such that the charging and discharging control system 100 enters the charging state.

Therefore, in the embodiment of the present disclosure, a connection state of the connection assembly can be identified based on the detection parameters, and a charging mode and a discharging mode can be automatically changed.

### Embodiment 2

Based on the above-mentioned embodiment, Embodiment 2 of the present invention provides a transport. This embodiment is applicable to automatic change of a charging function and a discharging function through a set of apparatuses.

Fig. 5 is a schematic structural diagram of a means of transport according to an embodiment 2 of the present invention.

As shown in Fig. 5, the transport 200 includes the charging and discharging control system 100 above.

In this embodiment, the transport 200 can be an electric vehicle.

The transport provided in the present invention is configured with a charging and discharging control system. The charging and discharging control system is configured with a vehicle-mounted charging and discharging module, a charging and discharging gun module, a charging connection module and a discharging connection module. The vehicle-mounted charging and discharging module is electrically connected with the charging and discharging gun module through a first connection assembly, and the charging and discharging gun module is electrically connected with the charging connection module through a second connection assembly. The vehicle-mounted charging and discharging module obtains a first detection parameter on a vehicle side through a vehicle-mounted controller, and controls the vehicle-mounted charging and discharging assembly to operate in a charging state or a discharging state based on the first detection parameter. The charging and discharging gun module obtains a second detection parameter on a charging and discharging gun side through a gun end control unit. The charging and discharging gun module controls a charging control switch to be switched on and a discharging control switch to be switched off in response to the second detection parameter satisfying a preset charging condition, such that the charging connection module charges the vehicle-mounted charging and discharging assembly, or the charging and discharging gun module controls the charging control switch to be switched off and the discharging control switch to be switched on in response to the second detection parameter satisfying a preset discharging condition, such that the vehicle-mounted charging and discharging assembly discharges the discharging connection module. A connection state of the connection assembly is determined based on the detection parameters, and the charging function and the discharging function are automatically changed. The problems of high cost and inconvenient use of the vehicle-mounted charging apparatus and the discharging apparatus are solved, and integrated setting and automatic change of the charging function and the discharging function without manually selecting a mode are achieved. A production cost is reduced, the charging connection module and the discharging connection module are prevented from being charged simultaneously, and the reliability and the safety of the system are improved.

### Embodiment 3

Based on the above-mentioned embodiments, embodiments of the present invention provides a charging and discharging control method. This embodiment is applicable to an application scene where a working state of a charging and discharging gun integrated with a charging function and a discharging function is automatically changed. A charging and discharging gun module is electrically connected with a vehicle-mounted charging and discharging module, a charging connection module, and a discharging connection module separately. The charging and discharging gun module is electrically connected with the vehicle-mounted charging and discharging module through a first connection assembly. The charging and discharging gun module is electrically connected with the charging connection module through a second connection assembly.

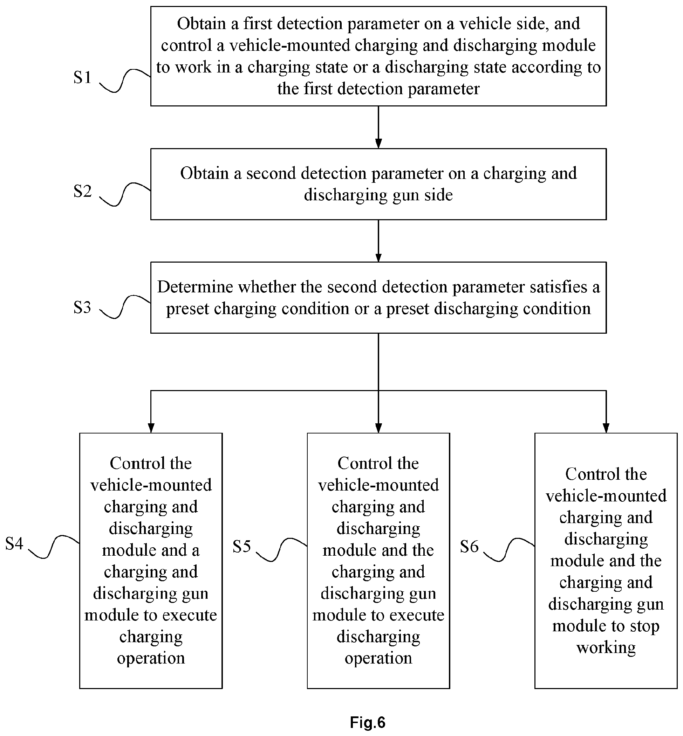

Fig. 6 is a flowchart of a charging and discharging control method according to an embodiment of the present invention.

As shown in Fig. 6, the charging and discharging control method includes:
At step S1: obtain a first detection parameter on a vehicle side, and control a vehicle-mounted charging and discharging module to operate in a charging state or a discharging state based on the first detection parameter.
At step S2: obtain a second detection parameter on a charging and discharging gun side.

Optionally, the first detection parameter includes a first voltage parameter of a first connection detecting terminal arranged on the vehicle side and a first resistor parameter between a charging control terminal and a first grounding terminal. The second detection parameter includes a second voltage parameter of the first connection detecting terminal arranged on the charging and discharging gun side and a second resistor parameter between the charging control terminal and the first grounding terminal.

In the embodiment, in response to a connection state of the first connection assembly and the second connection assembly changing, the first detection parameter and the second detection parameter have different values, such that the charging and discharging modes may be changed based on the obtained values of the first detection parameter and the second detection parameter.

At step S3: determine whether the second detection parameter satisfies a preset charging condition or a preset discharging condition.

In response to the second detection parameter satisfying the preset charging condition, the step S4 is executed. In response to the second detection parameter satisfying the preset discharging condition, the step S5 is executed. Otherwise, the step S6 is executed.

At step S4: control the vehicle-mounted charging and discharging module and a charging and discharging gun module to execute charging operation.

At step S5: control the vehicle-mounted charging and discharging module and the charging and discharging gun module to execute discharging operation.

At step S6: control the vehicle-mounted charging and discharging module and the charging and discharging gun module to stop working.

Optionally, a charging control switch, a discharging control switch and a charging and discharging transfer switch may be provided, and a charging mode and a discharging mode may be automatically changed through controlling the charging control switch, the discharging control switch and the charging and discharging transfer switch to be switched on or off.

In this embodiment, in response to the second detection parameter satisfying the preset charging condition, the charging control switch is controlled to be switched on, and a charging branch contact of the charging and discharging transfer switch is controlled to be switched on, such that a charging circuit is connected. In response to the second detection parameter satisfying the preset discharging condition, the discharging control switch is control to be switched on, and a discharging branch contact of the charging and discharging transfer switch is controlled to be switched on, such that a discharging circuit is connected. The charging control switch and the discharging control switch are not switched on simultaneously, such that the charging connection module and the discharging connection module are prevented from being charged simultaneously, the risk of electric shock caused by misoperation by personnel is reduced, and the reliability and the safety of the system are improved.

Optionally, the charging and discharging control method further includes: obtain a temperature in a charging and discharging gun; determine a temperature measurement result is beyond a preset temperature threshold; and determine that the charging and discharging gun is in a failure state in response to the temperature measurement result being beyond the preset temperature threshold, and control a discharging control switch, a charging control switch and a charging and discharging transfer switch to be switched off.

Optionally, the charging and discharging control method further includes: detect whether a discharging control switch or a charging and discharging transfer switch has a failure; control the charging and discharging transfer switch and the charging control switch to be switched off in response to the discharging control switch has a failure; and control the discharging control switch and the charging control switch to be switched off in response to the charging and discharging transfer switch has a failure.

Optionally, the charging and discharging control method further includes: in a charging process, convert an alternating-current voltage provided through a charging connection module into a direct-current power supply voltage, to supply power to a control unit of the charging and discharging gun; and in a discharging process, convert an alternating-current voltage provided through the vehicle-mounted charging and discharging module into a direct-current power supply voltage, to supply power to the control unit of the charging and discharging gun.

Based on the charging and discharging control method provided in the present invention, a vehicle-mounted controller obtains a first detection parameter on a vehicle side, and controls a vehicle-mounted charging and discharging assembly to work in a charging state or a discharging state based **on** the first detection parameter. A gun end control unit obtains a second detection parameter on a charging and discharging gun side, and controls a charging control switch to be switched on and a discharging control switch to be switched off in response to the second detection parameter satisfies a preset charging condition, to execute charging operation, or the gun end control unit controls the charging control switch to be switched off and the discharging control switch to be switched on in response to the second detection parameter satisfying a preset discharging condition, to execute discharging operation. A connection state of the connection assembly is determined based on the detection parameters, and the charging function and the discharging function are automatically changed. The problems of high cost and inconvenient operate of the vehicle-mounted charging device and the discharging device are solved, and integrated setting and automatic change of the charging function and the discharging function without manually selecting a mode are achieved. A production cost is reduced, the charging connection module and the discharging connection module are prevented from being charged simultaneously, and the reliability and the safety of the system are improved.

## Claims

1. A charging and discharging control system, comprising: a vehicle-mounted charging and discharging module (10), a charging and discharging gun module (20), a charging connection module (30), a discharging connection module (40), a first connection assembly (50) and a second connection assembly (60), wherein the discharging connection module comprises at least one alternating-current discharging receptacle (401), the vehicle-mounted charging and discharging module is electrically connected with the charging and discharging gun module through the first connection assembly, and the charging and discharging gun module is electrically connected with the charging connection module through the second connection assembly;
the vehicle-mounted charging and discharging module comprises a vehicle-mounted controller (110) and a vehicle-mounted charging and discharging asembly (120), and the vehicle-mounted controller is configured to obtain a first detection parameter on a vehicle side, and control the vehicle-mounted charging and discharging assembly to operate in a charging state or a discharging state according to the first detection parameter;
the charging and discharging gun module comprises a gun end control unit (210), a discharging control switch (K1), a charging control switch (K2) and a power supply module (220), wherein the discharging control switch, the charging control switch and the power supply module are electrically connected with the gun end control unit, the power supply module is configured to convert an alternating-current voltage provided by the vehicle-mounted charging and discharging assembly (120) or the charging connection module (30) into a direct-current power supply voltage of the gun end control unit (210) an input end of the discharging control switch (K1) is electrically connected with the first connection assembly (50), an output end of the discharging control switch (K1) is electrically connected with the discharging connection module (40), an input end of the charging control switch (K2) is electrically connected with the first connection assembly (50), and an output end of the charging control switch (K2) is electrically connected with the second connection assembly (60);
the gun end control unit (210) is configured to obtain a second detection parameter on a charging and discharging gun side, and control the charging control switch (K2) to be switched on and the discharging control switch (K1) to be switched off in response to determining that the second detection parameter satisfies a preset charging condition, to charge the vehicle-mounted charging and discharging assembly (120) through the charging connection module (30); and the gun end control unit (210) is configured to control the charging control switch (K2) to be switched off and the discharging control switch (K1) to be switched on in response to determining that the second detection parameter satisfies a preset discharging condition, to charge the discharging connection module (40) through the vehicle-mounted charging and discharging assembly (120);
the gun end control unit (210) is configured to identify a connection state of the first connection assembly (50) and the second connection assembly (60) based on the first detection parameter; and control the charging control switch (K2) and the discharging control switch (K1) to be switched on or off to change the charging mode and the discharging mode based on the connection state;
wherein the first connection assembly (50) is arranged with a charging control (CC) terminal, a first connection detecting (CP) terminal, a first alternating-current positive (L) terminal, a first alternating-current negative (N) terminal and a first grounding (PE) terminal, and the second connection assembly (60) is configured with a second connection detecting (CP') terminal, a second alternating-current positive (L') terminal, a second alternating-current negative (N') terminal, a second grounding (PE') terminal, a first input (a1) terminal and a second input (a2) terminal;
a first end of the charging control (CC) terminal is electrically connected with the vehicle-mounted controller (110), and a second end of the charging control (CC) terminal is electrically connected with a first pin of the gun end control unit (210) through a high-resistance type operational amplifier (U1);
a first end of the first connection detecting (CP) terminal is electrically connected with the vehicle-mounted controller (110), the first end of the first connection detecting (CP) terminal is further grounded through a grounding resistor assembly (130), a second end of the first connection detecting terminal is electrically connected with a second pin of the gun end control unit (210) through a second high-resistance type operational amplifier (U2), and the second end of the first connection detecting (CP) terminal is further electrically connected with the second connection detecting (CP') terminal;
a first end of the first alternating-current positive terminal is electrically connected with a positive end of the vehicle-mounted charging and discharging assembly (120), a second end of the first alternating-current positive terminal is electrically connected with the discharging connection module (40) through the discharging control switch (K1), and the second end of the first alternating-current positive terminal is further electrically connected with the second alternating-current positive terminal through the charging control switch (K2);
a first end of the first alternating-current negative terminal is electrically connected with a negative end of the vehicle-mounted charging and discharging assembly (120), and a second end of the first alternating-current negative terminal is respectively electrically connected with a negative power line of the alternating-current discharging receptacle (401) and the second alternating-current negative terminal;
a first end of the first grounding terminal is grounded, a second end of the first grounding terminal is electrically connected with the charging control (CC) terminal through a gun head resistor assembly (230), and a second end of the first grounding terminal is further electrically connected with the second grounding (PE') terminal;
a first end of the first input (a1) terminal is electrically connected with the gun head resistor assembly (230), and a second end of the first input (a1) terminal is respectively electrically connected with the charging connection module (30) and the second grounding (PE') terminal separately
a first end of the second input (a2) terminal is electrically connected with a third pin of the gun end control unit (210), and a second end of the second input (a2) terminal is electrically connected with the charging connection module (30).

2. The charging and discharging control system as claimed in claim 1, wherein the gun head resistor assembly (230) comprises a first (R1) resistor, a second (R2) resistor, a third (R3) resistor and a gun end (S1) button. the gun end button is configured with a normally open and normally closed common pin, a normally open (Sb) connection pin and a normally closed (Sc) connection pin, the normally open connection pin is electrically connected with a first end of the first resistor, a second end of the first resistor is electrically connected with the first grounding terminal, the normally open and normally closed common pin is electrically connected with the charging control terminal, the normally closed connection pin is respectively electrically connected with a first end of the second resistor and a first end of the third resistor, a second end of the second resistor is electrically connected with the first grounding terminal, and a second end of the third resistor is electrically connected with the first input terminal.

3. The charging and discharging control system as claimed in claim 1, wherein the charging and discharging gun module further comprises a charging and discharging transfer switch (K3), a control end of the charging and discharging transfer switch is electrically connected with the gun end control unit, a first end of the charging and discharging transfer switch is electrically connected with the first alternating-current negative terminal, a second end of the charging and discharging transfer switch is electrically connected with a negative power line of the discharging connection module, and a third end of the charging and discharging transfer switch is electrically connected with the second alternating-current negative terminal;
the gun end control unit is further configured to control the first end to be connected with the third end in response to the second detection parameter satisfying the preset charging condition, or control the first end to be connected with the second end in response to the second detection parameter satisfying the preset discharging condition.

4. The charging and discharging control system as claimed in claim 3, wherein the charging and discharging gun module further comprises at least one temperature sensor (NTC1,NTC2), and the temperature sensor is configured to measure a temperature in the charging and discharging gun to obtain a measurement result and send the measurement result to the gun end control unit;
the gun end control unit is further configured to control the discharging control switch, the charging control switch and the charging and discharging transfer switch to be disconnected in response to the measurement result being beyond a preset temperature threshold.

5. The charging and discharging control system as claimed in claim 3, wherein the charging and discharging gun module further comprises a failure detection (240) assembly, a first detection end of the failure detection assembly is electrically connected with an output end of the discharging control switch, a second detection end of the fault detection assembly is electrically connected with a second end of the charging and discharging transfer switch, an output end of the failure detection assembly is electrically connected with a detection pin of the gun end control unit, and the failure detection assembly is configured to detect whether the discharging control switch or the charging and discharging transfer switch exist a failure to obtain a failure detection result, and send the failure detection result to the gun end control unit;
the gun end control unit is further configured to control the charging and discharging transfer switch and the charging control switch to be disconnected in response to receiving a first failure signal of the discharging control switch, and control the discharging control switch and the charging control switch to be disconnected in response to receiving a second failure signal of the charging and discharging transfer switch.

6. The charging and discharging control system as claimed in any one of claims 1-5, wherein the first detection parameter comprises a first voltage parameter of the first connection detecting terminal arranged on the vehicle side and a first resistor parameter between the charging control terminal and the first grounding terminal, and the second detection parameter comprises a second voltage parameter of the first connection detecting terminal arranged on the charging and discharging gun side and a second resistor parameter between the charging control terminal and the first grounding terminal.

7. The charging and discharging control system as claimed in any one of claims 1-5, wherein the power supply module (220) comprises a first filter (221) unit, a second filter (222) unit and an alternating current-direct current conversion (223) unit, a positive input end of the first filter unit is electrically connected with the first alternating-current positive terminal, a negative input end of the first filter unit is electrically connected with the first alternating-current negative terminal, a positive output end of the first filter unit is electrically connected with a positive input end of the alternating current-direct current conversion unit through a first diode, and a negative output end of the first filter unit is electrically connected with a negative input end of the alternating current-direct current conversion unit;
a positive input end of the second filter unit is electrically connected with the second alternating-current positive terminal, a negative input end of the second filter unit is electrically connected with the second alternating-current negative terminal, a positive output end of the second filter unit is electrically connected with a positive input end of the alternating current-direct current conversion unit through a second diode, a negative output end of the second filter unit is electrically connected with a negative input end of the alternating current-direct current conversion unit, and an output end of the alternating current-direct current conversion unit is electrically connected with a power supply end of the gun end control unit;
the alternating current-direct current conversion unit is configured to convert the alternating-current voltage provided by the vehicle-mounted charging and discharging assembly or the charging connection module into a direct-current power supply voltage of the gun end control unit to supply power to the gun end control unit.

8. A transport system, comprising the charging and discharging control system as claimed in any one of claims 1-7.

9. A charging and discharging control method, applied to control charging and discharging states of a vehicle-mounted charging and discharging module (10) and a charging and discharging gun module (20) as claimed in claim 1, comprising:
obtaining (S1) a first detection parameter on a vehicle side, and controlling the vehicle-mounted charging and discharging module to operate in a charging state or a discharging state based on the first detection parameter;
obtaining (S2) a second detection parameter on a charging and discharging gun side;
determining (S3) whether the second detection parameter satisfies a preset charging condition or a preset discharging condition;
controlling (S4) the vehicle-mounted charging and discharging module and the charging and discharging gun module to execute charging operation in response to the second detection parameter satisfying the preset charging condition;
controlling (S5) the vehicle-mounted charging and discharging module and the charging and discharging gun module to execute discharging operation in response to \the second detection parameter satisfying the preset discharging condition;
controlling the vehicle-mounted charging and discharging module to operate in a charging state or a discharging state based on the first detection parameter comprises:
identifying a connection state of the first connection assembly and the second connection assembly based on the first detection parameter;
controlling the charging control switch and the discharging control switch to be switched on or off to change the charging mode and the discharging mode based on the connection state.

## Patentansprüche

1. Lade- und Entladesteuerungssystem, umfassend: ein fahrzeugmontiertes Lade- und Entlademodul (10), ein Lade- und Entladepistolenmodul (20), ein Ladeverbindungsmodul (30), ein Entladeverbindungsmodul (40), eine erste Verbindungsbaugruppe (50) und eine zweite Verbindungsbaugruppe (60),
wobei das Entladeverbindungsmodul mindestens eine Wechselstrom-Entladeaufnahme (401) umfasst, das fahrzeugmontierte Lade- und Entlademodul über die erste Verbindungsbaugruppe elektrisch mit dem Lade- und Entladepistolenmodul verbunden ist und das Lade- und Entladepistolenmodul über die zweite Verbindungsbaugruppe elektrisch mit dem Ladeverbindungsmodul verbunden ist;
das fahrzeugmontierte Lade- und Entlademodul umfasst eine fahrzeugmontierte Steuerung (110) und eine fahrzeugmontierte Lade- und Entladebaugruppe (120) und die fahrzeugmontierte Steuerung ist dazu ausgelegt, einen ersten Detektionsparameter auf einer Fahrzeugseite zu erhalten und die fahrzeugmontierte Lade- und Entladebaugruppe zu steuern, um in einem Ladezustand oder einem Entladezustand gemäß dem ersten Detektionsparameter zu arbeiten;
das Lade- und Entladepistolenmodul umfasst eine Pistolenendsteuerungseinheit (210), einen Entladesteuerungsschalter (K1), einen Ladesteuerungsschalter (K2) und ein Stromversorgungsmodul (220), wobei der Entladesteuerungsschalter, der Ladesteuerungsschalter und das Stromversorgungsmodul elektrisch mit der Pistolenendsteuerungseinheit verbunden sind, das Stromversorgungsmodul ausgelegt ist, um eine von der fahrzeugmontierten Lade- und Entladebaugruppe (120) oder dem Ladeverbindungsmodul (30) bereitgestellte Wechselstromspannung in eine Gleichstromstromversorgungsspannung der Pistolenendsteuerungseinheit (210) umzuwandeln, ein Eingangsende des Entladesteuerungsschalters (K1) elektrisch mit der ersten Verbindungsbaugruppe (50) verbunden ist, ein Ausgangsende des Entladesteuerungsschalters (K1) elektrisch mit dem Entladeverbindungsmodul (40) verbunden ist, ein Eingangsende des Ladesteuerungsschalters (K2) elektrisch mit der ersten Verbindungsbaugruppe (50) verbunden ist und ein Ausgangsende des Ladesteuerungsschalters (K2) elektrisch mit der zweiten Verbindungsbaugruppe (60) verbunden ist;
die Pistolenendsteuerungseinheit (210) ist dazu ausgelegt, einen zweiten Detektionsparameter auf einer Lade- und Entladepistolenseite zu erhalten und den einzuschaltenden Ladesteuerungsschalter (K2) und den auszuschaltenden Entladesteuerungsschalter (K1) als Reaktion auf die Feststellung, dass der zweite Detektionsparameter eine voreingestellte Ladebedingung erfüllt, zu steuern, um die fahrzeugmontierte Lade- und Entladebaugruppe (120) über das Ladeverbindungsmodul (30) zu laden; und die Pistolenendsteuerungseinheit (210) ist dazu ausgelegt, den auszuschaltenden Ladesteuerungsschalter (K2) und den einzuschaltenden Entladesteuerungsschalter (K1) als Reaktion auf die Feststellung, dass der zweite Detektionsparameter eine voreingestellte Entladebedingung erfüllt, zu steuern, um das Entladeverbindungsmodul (40) über die fahrzeugmontierte Lade- und Entladebaugruppe (120) zu laden;
die Pistolenendsteuerungseinheit (210) ist ausgelegt, um einen Verbindungszustand der ersten Verbindungsbaugruppe (50) und der zweiten Verbindungsbaugruppe (60) auf Grundlage des ersten Detektionsparameters zu identifizieren und um den Ladesteuerungsschalter (K2) und den Entladesteuerungsschalter (K1) zu steuern, um ein- oder ausgeschaltet zu werden, um den Lademodus und den Entlademodus auf Grundlage des Verbindungszustands zu ändern;
wobei die erste Verbindungsbaugruppe (50) mit einer Ladesteuerungsklemme (CC),
einer ersten Verbindungsdetektionsklemme (CP), einer ersten positiven Wechselstromklemme (L), einer ersten negativen Wechselstromklemme (N) und einer ersten Erdungsklemme (PE) angeordnet ist, und die zweite Verbindungsbaugruppe (60) mit einer zweiten Verbindungsdetektionsklemme (CP'), einer zweiten positiven Wechselstromklemme (L'), einer zweiten negativen Wechselstromklemme (N'), einer zweiten Erdungsklemme (PE'), einer ersten Eingangsklemme (a1) und einer zweiten Eingangsklemme (a2) ausgelegt ist; ein erstes Ende der Ladesteuerungsklemme (CC) ist elektrisch mit der fahrzeugmontierten Steuerung (110) verbunden, und ein zweites Ende der Ladesteuerungsklemme (CC) ist elektrisch mit einem ersten Stift der Pistolenendsteuerungseinheit (210) über einen Operationsverstärker (U1) vom hochohmigen Typ verbunden; ein erstes Ende der ersten Verbindungsdetektionsklemme (CP) ist elektrisch mit der fahrzeugmontierten Steuerung (110) verbunden, das erste Ende der ersten Verbindungsdetektionsklemme (CP) ist ferner über eine Erdungswiderstandsbaugruppe (130) geerdet, ein zweites Ende der ersten Verbindungsdetektionsklemme ist elektrisch mit einem zweiten Stift der Pistolenendsteuerungseinheit (210) über einen zweiten Operationsverstärker (U2) vom hochohmigen Typ verbunden, und das zweite Ende der ersten Verbindungsdetektionsklemme (CP) ist ferner elektrisch mit der zweiten Verbindungsdetektionsklemme (CP') verbunden;
ein erstes Ende der ersten positiven Wechselstromklemme ist elektrisch mit einem positiven Ende der fahrzeugmontierten Lade- und Entladebaugruppe (120) verbunden, ein zweites Ende der ersten positiven Wechselstromklemme ist elektrisch mit dem Entladeverbindungsmodul (40) durch den Entladesteuerungsschalter (K1) verbunden und das zweite Ende der ersten positiven Wechselstromklemme ist ferner elektrisch mit der zweiten positiven Wechselstromklemme durch den Ladesteuerungsschalter (K2) verbunden;
ein erstes Ende der ersten negativen Wechselstromklemme ist elektrisch mit einem negativen Ende der fahrzeugmontierten Lade- und Entladebaugruppe (120) verbunden und ein zweites Ende der ersten negativen Wechselstromklemme ist jeweils elektrisch mit einer negativen Stromleitung der Wechselstromentladeaufnahme (401) und der zweiten negativen Wechselstromklemme verbunden;
ein erstes Ende der ersten Erdungsklemme ist geerdet, ein zweites Ende der ersten Erdungsklemme ist über eine Pistolenkopfwiderstandsbaugruppe (230) elektrisch mit der Ladesteuerungsklemme (CC) verbunden und ein zweites Ende der ersten Erdungsklemme ist ferner elektrisch mit der zweiten Erdungsklemme (PE') verbunden;
ein erstes Ende der ersten Eingangsklemme (a1) ist elektrisch mit der Pistolenkopfwiderstandsbaugruppe (230) verbunden, und ein zweites Ende der ersten Eingangsklemme (a1) ist jeweils elektrisch mit dem Ladeverbindungsmodul (30) und der zweiten Erdungsklemme (PE') getrennt verbunden;
ein erstes Ende der zweiten Eingangsklemme (a2) ist elektrisch mit einem dritten Stift der Pistolenendsteuerungseinheit (210) verbunden, und ein zweites Ende der zweiten Eingangsklemme (a2) ist elektrisch mit dem Ladeverbindungsmodul (30) verbunden.

2. Lade- und Entladesteuerungssystem nach Anspruch 1, wobei die Pistolenkopfwiderstandsbaugruppe (230) einen ersten Widerstand (R1), einen zweiten Widerstand (R2), einen dritten Widerstand (R3) und eine Pistolenendknopf (S1) umfasst,
der Pistolenendknopf mit einem normalerweise offenen und normalerweise geschlossenen gemeinsamen Stift, einem normalerweise offenen Verbindungsstift (Sb) und einem normalerweise geschlossenen Verbindungsstift (Sc) ausgelegt ist, der normalerweise offene Verbindungsstift elektrisch mit einem ersten Ende des ersten Widerstands verbunden ist, ein zweites Ende des ersten Widerstands elektrisch mit der ersten Erdungsklemme verbunden ist, der normalerweise offene und normalerweise geschlossene gemeinsame Stift elektrisch mit der Ladesteuerungsklemme verbunden ist, der normalerweise geschlossene Verbindungsstift jeweils elektrisch mit einem ersten Ende des zweiten Widerstands und einem ersten Ende des dritten Widerstands verbunden ist, ein zweites Ende des zweiten Widerstands elektrisch mit der ersten Erdungsklemme verbunden ist und ein zweites Ende des dritten Widerstands elektrisch mit der ersten Eingangsklemme verbunden ist.

3. Lade- und Entladesteuerungssystem nach Anspruch 1, wobei das Lade- und Entladepistolenmodul ferner einen Lade- und Entladetransferschalter (K3) umfasst, ein Steuerungsende des Lade- und Entladetransferschalters elektrisch mit der Pistolenendsteuerungseinheit verbunden ist, ein erstes Ende des Lade- und Entladetransferschalters elektrisch mit dem ersten negativen Wechselstromklemme verbunden ist, ein zweites Ende des Lade- und Entladetransferschalters elektrisch mit einer negativen Stromleitung des Entladeverbindungsmoduls verbunden ist und ein drittes Ende des Lade- und Entladetransferschalters elektrisch mit dem zweiten negativen Wechselstromklemme verbunden ist;
die Pistolenendsteuerungseinheit ist ferner dazu ausgelegt, das erste Ende, das mit dem dritten Ende verbunden werden soll, als Reaktion darauf zu steuern, dass der zweite Detektionsparameter die voreingestellte Ladebedingung erfüllt, oder das erste Ende, das mit dem zweiten Ende verbunden werden soll, als Reaktion darauf zu steuern, dass der zweite Detektionsparameter die voreingestellte Entladebedingung erfüllt.

4. Lade- und Entladesteuerungssystem nach Anspruch **3,** wobei das Lade- und Entladepistolenmodul ferner mindestens einen Temperatursensor (NTC1,NTC2) umfasst und der Temperatursensor ist dazu ausgelegt, eine Temperatur in der Lade- und Entladepistole zu messen, um ein Messergebnis zu erhalten und das Messergebnis an die Pistolenendsteuerungseinheit zu senden;
die Pistolenendsteuerungseinheit ist ferner dazu ausgelegt, den Entladesteuerungsschalter, den Ladesteuerungsschalter und den Lade- und Entladetransferschalter zu steuern, um als Reaktion darauf, dass das Messergebnis über einem voreingestellten Temperaturschwellenwert liegt, sich zu trennen.

5. Lade- und Entladesteuerungssystem nach Anspruch **3,** wobei das Lade- und Entladepistolenmodul ferner eine Fehlerdetektionsbaugruppe (240) umfasst, ein erstes Detektionsende der Fehlerdetektionsbaugruppe elektrisch mit einem Ausgangsende des Entladesteuerungsschalters verbunden ist, ein zweites Detektionsende der Fehlerdetektionsbaugruppe elektrisch mit einem zweiten Ende des Lade- und Entladetransferschalters verbunden ist, ein Ausgangsende der Fehlerdetektionsbaugruppe elektrisch mit einem Detektionsstift der Pistolenendsteuerungseinheit verbunden ist und die Fehlerdetektionsbaugruppe ausgelegt ist, um zu detektieren, ob der Entladesteuerungsschalter oder der Lade- und Entladetransferschalter einen Fehler beim Erhalten eines Fehlerdetektionsergebnisses aufweist, und das Fehlerdetektionsergebnis an die Pistolenendsteuerungseinheit zu senden;
die Pistolenendsteuerungseinheit ist ferner dazu ausgelegt, den Lade- und Entladetransferschalter und den Ladesteuerungsschalter zu steuern, um als Reaktion auf das Empfangen eines ersten Fehlersignals des Entladesteuerungsschalters, sich zu trennen, und den Entladesteuerungsschalter und den Ladesteuerungsschalter zu steuern, um als Reaktion auf das Empfangen eines zweiten Fehlersignals des Lade- und Entladetransferschalters, sich zu trennen.

6. Lade- und Entladesteuerungssystem nach einem der Ansprüche 1-5, wobei der erste Detektionsparameter einen ersten Spannungsparameter der ersten Verbindungsdetektionsklemme, die auf der Fahrzeugseite angeordnet ist, und einen ersten Widerstandsparameter zwischen der Ladesteuerungsklemme und der ersten Erdungsklemme umfasst, und der zweite Detektionsparameter einen zweiten Spannungsparameter der ersten Verbindungsdetektionsklemme, der auf der Lade- und Entladepistolenseite angeordnet ist, und einen zweiten Widerstandsparameter zwischen der Ladesteuerungsklemme und der ersten Erdungsklemme umfasst.

7. Lade- und Entladesteuerungssystem nach einem der Ansprüche 1-5, wobei das Stromversorgungsmodul (220) eine erste Filtereinheit (221), eine zweite Filtereinheit (222) und eine Wechselstrom-Gleichstrom-Umwandlungseinheit (223) umfasst, ein positives Eingangsende der ersten Filtereinheit elektrisch mit dem ersten positiven Wechselstromklemme verbunden ist, ein negatives Eingangsende der ersten Filtereinheit elektrisch mit dem ersten negativen Wechselstromklemme verbunden ist, ein positives Ausgangsende der ersten Filtereinheit elektrisch mit einem positiven Eingangsende der Wechselstrom-Gleichstrom-Umwandlungseinheit über eine erste Diode verbunden ist und ein negatives Ausgangsende der ersten Filtereinheit elektrisch mit einem negativen Eingangsende der Wechselstrom-Gleichstrom-Umwandlungseinheit verbunden ist;
ein positives Eingangsende der zweiten Filtereinheit ist elektrisch mit dem zweiten positiven Wechselstromklemme verbunden, ein negatives Eingangsende der zweiten Filtereinheit ist elektrisch mit dem zweiten negativen Wechselstromklemme verbunden, ein positives Ausgangsende der zweiten Filtereinheit ist elektrisch mit einem positiven Eingangsende der Wechselstrom-Gleichstrom-Umwandlungseinheit über eine zweite Diode verbunden, ein negatives Ausgangsende der zweiten Filtereinheit ist elektrisch mit einem negativen Eingangsende der Wechselstrom-Gleichstrom-Umwandlungseinheit verbunden und ein Ausgangsende der Wechselstrom-Gleichstrom-Umwandlungseinheit ist elektrisch mit einem Stromversorgungsende der Pistolenendsteuerungseinheit verbunden;
die Wechselstrom-Gleichstrom-Umwandlungseinheit ist dazu ausgelegt, die von der fahrzeugmontierten Lade- und Entladebaugruppe oder dem Ladeverbindungsmodul bereitgestellte Wechselstromspannung in eine Gleichstromversorgungsspannung der Pistolenendsteuerungseinheit umzuwandeln, um der Pistolenendsteuerungseinheit Leistung zuzuführen.

8. Transportsystem, umfassend das Lade- und Entladesteuerungssystem nach einem der Ansprüche 1-7.

9. Lade- und Entladesteuerverfahren, angewendet zum Steuern von Lade- und Entladezuständen eines fahrzeugmontierten Lade- und Entlademoduls (10) und eines Lade- und Entladepistolenmoduls (20) nach Anspruch 1, umfassend:
Erhalten (S1) eines ersten Detektionsparameters auf einer Fahrzeugseite und Steuern des fahrzeugmontierten Lade- und Entlademoduls, um in einem Ladezustand oder einem Entladezustand auf Grundlage des ersten Detektionsparameters zu arbeiten;
Erhalten (S2) eines zweiten Detektionsparameters auf einer Lade- und Entladepistolenseite;
Bestimmen (S3), ob der zweite Detektionsparameter eine voreingestellte Ladebedingung oder eine voreingestellte Entladebedingung erfüllt;
Steuern (S4) des fahrzeugmontierten Lade- und Entlademoduls und des Lade- und Entladepistolenmoduls, um den Ladevorgang als Reaktion darauf auszuführen, dass der zweite Detektionsparameter die voreingestellte Ladebedingung erfüllt;
Steuern (S5) des fahrzeugmontierten Lade- und Entlademoduls und des Lade- und Entladepistolenmoduls, um den Entladevorgang als Reaktion darauf auszuführen, dass der zweite Detektionsparameter die voreingestellte Entladebedingung erfüllt;
das Steuern des fahrzeugmontierten Lade- und Entlademoduls, um in einem Ladezustand oder einem Entladezustand auf Grundlage des ersten Detektionsparameters zu arbeiten, umfasst:
Identifizieren eines Verbindungszustands der ersten Verbindungsbaugruppe und der zweiten Verbindungsbaugruppe auf Grundlage des ersten Detektionsparameters;
Steuern des Ladesteuerungsschalters und des Entladesteuerungsschalters, um ein- oder ausgeschaltet zu werden, um den Lademodus und den Entlademodus auf Grundlage des Verbindungszustands zu ändern.

## Revendications

1. Système de commande de charge et de décharge, comprenant : un module de charge et de décharge monté sur véhicule (10), un module de pistolet de charge et de décharge (20), un module de connexion de charge (30), un module de connexion de décharge (40), un premier ensemble de connexion (50) et un second ensemble de connexion (60),
dans lequel le module de connexion de décharge comprend au moins un réceptacle de décharge à courant alternatif (401), le module de charge et de décharge monté sur véhicule est électriquement connecté au module de pistolet de charge et de décharge à travers le premier ensemble de connexion, et le module de pistolet de charge et de décharge est électriquement connecté au module de connexion de charge à travers le second ensemble de connexion ;
le module de charge et de décharge monté sur véhicule comprend un contrôleur monté sur véhicule (110) et un ensemble de charge et de décharge monté sur véhicule (120), et le contrôleur monté sur véhicule est configuré pour obtenir un premier paramètre de détection du côté du véhicule, et commander l'ensemble de charge et de décharge monté sur véhicule pour qu'il fonctionne dans un état de charge ou dans un état de décharge selon le premier paramètre de détection ;
le module de pistolet de charge et de décharge comprend une unité de commande d'extrémité de pistolet (210), un commutateur de commande de décharge (K1), un commutateur de commande de charge (K2) et un module d'alimentation électrique (220), dans lequel le commutateur de commande de décharge, le commutateur de commande de charge et le module d'alimentation électrique sont électriquement connectés à l'unité de commande d'extrémité de pistolet, le module d'alimentation électrique est configuré pour convertir une tension de courant alternatif fournie par l'ensemble de charge et de décharge monté sur véhicule (120) ou le module de connexion de charge (30) en une tension d'alimentation en courant continu de l'unité de commande d'extrémité de pistolet (210), une extrémité d'entrée du commutateur de commande de décharge (K1) est électriquement connectée au premier ensemble de connexion (50), une extrémité de sortie du commutateur de commande de décharge (K1) est électriquement connectée au module de connexion de décharge (40), une extrémité d'entrée du commutateur de commande de charge (K2) est électriquement connectée au premier ensemble de connexion (50), et une extrémité de sortie du commutateur de commande de charge (K2) est électriquement connectée au second ensemble de connexion (60) ;
l'unité de commande d'extrémité de pistolet (210) est configurée pour obtenir un second paramètre de détection du côté du pistolet de charge et de décharge, et pour commander le commutateur de commande de charge (K2) à allumer et le commutateur de commande de décharge (K1) à éteindre en réponse à déterminer que le second paramètre de détection satisfait à une condition de charge prédéfinie, pour charger l'ensemble de charge et de décharge monté sur véhicule (120) à travers le module de connexion de charge (30) ; et l'unité de commande d'extrémité de pistolet (210) est configurée pour commander le commutateur de commande de charge (K2) à éteindre et le commutateur de commande de décharge (K1) à allumer en réponse à déterminer que le second paramètre de détection satisfait à une condition de décharge prédéfinie, pour charger le module de connexion de décharge (40)à travers l'ensemble de charge et de décharge monté sur véhicule (120) ;
l'unité de commande d'extrémité de pistolet (210) est configurée pour identifier un état de connexion du premier ensemble de connexion (50) et du second ensemble de connexion (60) sur la base du premier paramètre de détection ; et commander le commutateur de commande de charge (K2) et le commutateur de commande de décharge (K1) pour qu'ils soient allumés ou éteints pour changer le mode de charge et le mode de décharge sur la base de l'état de connexion ;
dans lequel le premier ensemble de connexion (50) est agencé avec une borne de commande de charge (CC),
une première borne de détection de connexion (CP), une première borne positive de courant alternatif (L), une première borne négative de courant alternatif (N) et une première borne de mise à la terre (PE), et le second ensemble de connexion (60) est configuré avec une seconde borne de détection de connexion (CP'), une seconde borne positive de courant alternatif (L'), une seconde borne négative de courant alternatif (N'), une seconde borne de mise à la terre (PE'), une première borne d'entrée (a1) et une seconde borne d'entrée (a2) ;
une première extrémité de la borne de commande de charge (CC) est électriquement connectée au contrôleur monté sur véhicule (110), et une deuxième extrémité de la borne de commande de charge (CC) est électriquement connectée à une première broche de l'unité de commande d'extrémité de pistolet (210) à travers un amplificateur opérationnel de type haute résistance (U1) ;
une première extrémité de la première borne de détection de connexion (CP) est électriquement connectée au contrôleur monté sur véhicule (110), la première extrémité de la première borne de détection de connexion (CP) est en outre mise à la terre à travers un ensemble de résistance de mise à la terre (130), une deuxième extrémité de la première borne de détection de connexion est électriquement connectée à une deuxième broche de l'unité de commande d'extrémité de pistolet (210) à travers un second amplificateur opérationnel de type haute résistance (U2), et la deuxième extrémité de la première borne de détection de connexion (CP) est en outre électriquement connectée à la seconde borne de détection de connexion (CP') ;
une première extrémité de la première borne positive de courant alternatif est électriquement connectée à une extrémité positive de l'ensemble de charge et de décharge monté sur véhicule (120), une deuxième extrémité de la première borne positive de courant alternatif est électriquement connectée au module de connexion de décharge (40) à travers le commutateur de commande de décharge (K1), et la deuxième extrémité de la première borne positive de courant alternatif est en outre électriquement connectée à la seconde borne positive de courant alternatif à travers le commutateur de commande de charge (K2) ;
une première extrémité de la première borne négative de courant alternatif est électriquement connectée à une extrémité négative de l'ensemble de charge et de décharge monté sur véhicule (120), et une deuxième extrémité de la première borne négative de courant alternatif est respectivement électriquement connectée à une ligne d'alimentation négative du réceptacle de décharge de courant alternatif (401) et de la seconde borne négative de courant alternatif ;
une première extrémité de la première borne de mise à la terre est mise à la terre, une deuxième extrémité de la première borne de mise à la terre est électriquement connectée à la borne de commande de charge (CC) à travers un ensemble résistance de tête de pistolet (230), et une deuxième extrémité de la première borne de mise à la terre est en outre électriquement connectée à la seconde borne de mise à la terre (PE') ;
une première extrémité de la première borne d'entrée (a1) est électriquement connectée à l'ensemble de résistance de tête de pistolet (230), et une deuxième extrémité de la première borne d'entrée (a1) est respectivement électriquement connectée au module de connexion de charge (30) et à la seconde borne de mise à la terre (PE') séparément ;
une première extrémité de la seconde borne d'entrée (a2) est électriquement connectée à une troisième broche de l'unité de commande d'extrémité de pistolet (210), et une deuxième extrémité de la seconde borne d'entrée (a2) est électriquement connectée au module de connexion de charge (30).

2. Système de commande de charge et de décharge selon la revendication 1, dans lequel l'ensemble de résistance de tête de pistolet (230) comprend une première (R1) résistance, une deuxième (R2) résistance, une troisième (R3) résistance et un bouton d'extrémité de pistolet (S1),
le bouton d'extrémité de pistolet est configuré avec une broche commune normalement ouverte et normalement fermée, une broche de connexion normalement ouverte (Sb) et une broche de connexion normalement fermée (Sc), la broche de connexion normalement ouverte est électriquement connectée à une première extrémité de la première résistance, une deuxième extrémité de la première résistance est électriquement connectée à la première borne de mise à la terre, la broche commune normalement ouverte et normalement fermée est électriquement connectée à la borne de commande de charge, la broche de connexion normalement fermée est respectivement électriquement connectée à une première extrémité de la deuxième résistance et à une première extrémité de la troisième résistance, une deuxième extrémité de la deuxième résistance est électriquement connectée à la première borne de mise à la terre, et une deuxième extrémité de la troisième résistance est électriquement connectée à la première borne d'entrée.

3. Système de commande de charge et de décharge selon la revendication 1, dans lequel le module de pistolet de charge et de décharge comprend en outre un commutateur de transfert de charge et de décharge (K3), une extrémité de commande du commutateur de transfert de charge et de décharge est électriquement connectée à l'unité de commande d'extrémité de pistolet, une première extrémité du commutateur de transfert de charge et de décharge est électriquement connectée à la première borne négative de courant alternatif, une deuxième extrémité du commutateur de transfert de charge et de décharge est électriquement connectée à une ligne d'alimentation négative du module de connexion de décharge, et une troisième extrémité du commutateur de transfert de charge et de décharge est électriquement connectée à la seconde borne négative de courant alternatif ;
l'unité de commande d'extrémité de pistolet est en outre configurée pour commander la première extrémité à connecter à la troisième extrémité en réponse au second paramètre de détection satisfaisant à la condition de charge prédéfinie, ou pour commander la première extrémité à connecter à la deuxième extrémité en réponse au second paramètre de détection satisfaisant à la condition de décharge prédéfinie.

4. Système de commande de charge et de décharge selon la revendication 3, dans lequel le module de pistolet de charge et de décharge comprend en outre au moins un capteur de température (NTC1,NTC2), et le capteur de température est configuré pour mesurer une température dans le pistolet de charge et de décharge pour obtenir un résultat de mesure et envoyer le résultat de mesure à l'unité de commande d'extrémité de pistolet ;
l'unité de commande d'extrémité de pistolet est en outre configurée pour commander le commutateur de commande de décharge, le commutateur de commande de charge et le commutateur de transfert de charge et de décharge à déconnecter en réponse au résultat de mesure dépassant un seuil de température prédéfini.

5. Système de commande de charge et de décharge selon la revendication 3, dans lequel le module de pistolet de charge et de décharge comprend en outre un ensemble de détection de défaillance (240), une première extrémité de détection de l'ensemble de détection de défaillance est électriquement connectée à une extrémité de sortie du commutateur de commande de décharge, une deuxième extrémité de détection de l'ensemble de détection de défaillance est électriquement connectée à une deuxième extrémité du commutateur de transfert de charge et de décharge, une extrémité de sortie de l'ensemble de détection de défaillance est électriquement connectée à une broche de détection de l'unité de commande d'extrémité de pistolet, et l'ensemble de détection de défaillance est configuré pour détecter si le commutateur de commande de décharge ou le commutateur de transfert de charge et de décharge présentent une défaillance pour obtenir un résultat de détection de défaillance, et envoyer le résultat de détection de défaillance à l'unité de commande d'extrémité de pistolet ;
l'unité de commande d'extrémité de pistolet est en outre configurée pour commander le commutateur de transfert de charge et de décharge et le commutateur de commande de charge à déconnecter en réponse à la réception d'un premier signal de défaillance du commutateur de commande de décharge, et pour commander le commutateur de commande de décharge et le commutateur de commande de charge à déconnecter en réponse à la réception d'un second signal de défaillance du commutateur de transfert de charge et de décharge.

6. Système de commande de charge et de décharge selon l'une quelconque des revendications 1 à 5, dans lequel le premier paramètre de détection comprend un premier paramètre de tension de la première borne de détection de connexion agencée du côté du véhicule et un premier paramètre de résistance entre la borne de commande de charge et la première borne de mise à la terre, et le second paramètre de détection comprend un second paramètre de tension de la première borne de détection de connexion agencée du côté du pistolet de charge et de décharge et un second paramètre de résistance entre la borne de commande de charge et la première borne de mise à la terre.

7. Système de commande de charge et de décharge selon l'une quelconque des revendications 1 à 5, dans lequel le module d'alimentation électrique (220) comprend une première unité de filtre (221), une seconde unité de filtre (222) et une unité de conversion de courant alternatif en courant continu (223), une extrémité d'entrée positive de la première unité de filtre est électriquement connectée à la première borne positive de courant alternatif, une extrémité d'entrée négative de la première unité de filtre est électriquement connectée à la première borne négative de courant alternatif, une extrémité de sortie positive de la première unité de filtre est électriquement connectée à une extrémité d'entrée positive de l'unité de conversion de courant alternatif en courant continu à travers une première diode, et une extrémité de sortie négative de la première unité de filtre est électriquement connectée à une extrémité d'entrée négative de l'unité de conversion de courant alternatif en courant continu ;
une extrémité d'entrée positive de la seconde unité de filtre est électriquement connectée à la seconde borne positive de courant alternatif, une extrémité d'entrée négative de la seconde unité de filtre est électriquement connectée à la seconde borne négative de courant alternatif, une extrémité de sortie positive de la seconde unité de filtre est électriquement connectée à une extrémité d'entrée positive de l'unité de conversion de courant alternatif en courant continu à travers une seconde diode, une extrémité de sortie négative de la seconde unité de filtre est électriquement connectée à une extrémité d'entrée négative de l'unité de conversion de courant alternatif en courant continu, et une extrémité de sortie de l'unité de conversion de courant alternatif en courant continu est électriquement connectée à une extrémité d'alimentation électrique de l'unité de commande d'extrémité de pistolet ;
l'unité de conversion de courant alternatif en courant continu est configurée pour convertir la tension de courant alternatif fournie par l'ensemble de charge et de décharge monté sur véhicule ou le module de connexion de charge en une tension d'alimentation électrique en courant continu de l'unité de commande d'extrémité de pistolet pour alimenter l'unité de commande d'extrémité de pistolet.

8. Système de transport, comprenant le système de commande de charge et de décharge selon l'une quelconque des revendications 1 à 7.

9. Procédé de commande de charge et de décharge, appliqué pour commander les états de charge et de décharge d'un module de charge et de décharge monté sur véhicule (10) et d'un module de pistolet de charge et de décharge (20) selon la revendication 1, comprenant :
obtenir (S1) un premier paramètre de détection sur un côté du véhicule, et commander le module de charge et de décharge monté sur véhicule pour qu'il fonctionne dans un état de charge ou un état de décharge sur la base du premier paramètre de détection ;
obtenir (S2) un second paramètre de détection du côté du pistolet de charge et de décharge ;
déterminer (S3) si le second paramètre de détection satisfait une condition de charge prédéfinie ou une condition de décharge prédéfinie ;
commander (S4) le module de charge et de décharge monté sur véhicule et le module de pistolet de charge et de décharge pour exécuter l'opération de charge en réponse au second paramètre de détection satisfaisant à la condition de charge prédéfinie ;
commander (S5) le module de charge et de décharge monté sur véhicule et le module de pistolet de charge et de décharge pour exécuter l'opération de décharge en réponse au second paramètre de détection satisfaisant à la condition de décharge prédéfinie ;
commander le module de charge et de décharge monté sur véhicule pour qu'il fonctionne dans un état de charge ou un état de décharge sur la base du premier paramètre de détection comprend :
identifier un état de connexion du premier ensemble de connexion et du second ensemble de connexion sur la base du premier paramètre de détection ;
commander le commutateur de commande de charge et le commutateur de commande de décharge pour qu'ils soient allumés ou éteints afin de changer le mode de charge et le mode de décharge en fonction de l'état de connexion.
